# EUROPÄISCHE PATENTANMELDUNG

(11) **EP 0 981 949 A1**
(43) Veröffentlichungstag der Anmeldung: **01.03.2000**
(21) Anmeldenummer: 99112915.6
(22) Anmeldetag: 05.07.1999
(51) Int. Cl.: A01G 9/02, A47G 7/04

(54) **Kunststoffblumenkasten**

(30) Priorität: 28.08.1998 DE 29815422 U
(71) Anmelder: Besecke, Edmund E., 31785 Hameln (DE)
(72) Erfinder: Besecke, Edmund E., 31785 Hameln (DE)
(74) Vertreter: Stracke, Alexander, Dipl.-Ing.

(57) **Zusammenfassung**

Die Erfindung betrifft einen Kunststoffblumenkasten, der mittels Blumenkastenhalter aufhängbar ist, die jeweils einen Einhängewinkel und einen damit lösbar verbundenen Tragbügel aufweisen, wobei die Tragbügel (17) zumindest in eine der beiden Seitenwände (11, 12) und dem Boden (15) des Kunststoffblumenkastens (10) ein-gebettet oder an den Innenseiten anliegend angeordnet sind.

## Beschreibung

Die Erfindung betrifft einen Kunststoffblumenkasten, der mittels Blumenkastenhalter aufhängbar ist, die jeweils einen Einhängewinkel und einen damit verbundenen Tragbügel aufweisen.

Kunststoffblumenkästen sind in vielen Ausführungen bekannt. Mittels der Blumenkastenhalter werden sie beispielsweise am Obergurt eines Balkongeländers oder einer Brüstung aufgehängt. Die Anzahl der Blumenkasterhalter für einen Kunststoffblumenkasten richtet sich nach der Länge des Kunststoffblumenkastens. Bei den Blumenkastenhaltern übergreift jeder Einhängewinkel den Obergurt des Balkongeländers bzw. die Brüstung. Der Tragbügel umgreift den Kunststoffblumenkasten an der Außenseite, wobei jedoch der dem Einhängewinkel abgewandte freie Schenkel im Abstand zum oberen Rand der Seitenwand des Blumenkastens endet.

Zusätzlich kann der Blumenkastenhalter noch mit einem Sicherungswinkel ausgerüstet sein, der zusammen mit dem Tragbügel und dem Einhängewinkel verschraubt ist.

Nachteilig ist bei den bislang bekannten Kunststoffblumenkästen, daß zunächst die Blumenkastenhalter an den Kunststoffblumenkasten angebracht werden müssen. Dazu müssen der Einhängewinkel, ggfs. der Sicherungswinkel und der Tragbügel lagegerecht zum Kunststoffblumenkasten gebracht werden und dann miteinander verschraubt werden. Diese Arbeit ist recht umständlich. Außerdem kann es passieren, daß die Oberflächenbeschichtung zerstört wird, so daß durch die Witterungseinflüsse der Tragbügel rostet.

Der Erfindung liegt die Aufgabe zugrunde, einen Kunststoffblumenkasten der eingangs näher beschriebenen Art in einfacher Weise so zu gestalten, daß das Aufhängen an einem Balkongeländer, einer Brüstung oder dergleichen in wesentlich vereinfachter Weise erfolgen kann.

Die gestellte Aufgabe wird gelöst, indem die Tragbügel zumindest in eine der beiden Seitenwände und dem Boden eingebettet oder an den Innenseiten anliegend angeordnet sind. Da nunmehr die Tragbügel fest mit dem Kunststoffblumenkasten verbunden sind, lassen sich die Einhängehaken in äußerst einfacher Weise mit den Tragbügeln verbinden, beispielsweise verschrauben. Danach kann dann der Kunststoffblumenkasten bereits aufgehängt werden.

Kunststoffblumenkästen sind normalerweise an den oberen, den Böden abgewandten Rändern mit vorzugsweise umlaufenden und nach außen gerichteten und zum Boden offenen Verstärkungsleisten ausgestattet. Es ist dann vorgesehen, daß jeder Tragbügel sich von einer längsseitigen Verstärkungsleiste durch die beiden Seitenwände und dem Boden hindurch bis in die andere längsseitige Verstärkungsleiste erstreckt oder daß die Tragbügel an den Innenflächen der beiden Seitenwände und dem Boden anliegend angeordnet sind. Dadurch können die Einhängewinkel wahlweise der einen Verstärkungsleiste oder der gegenüberliegenden Verstärkungsleiste zugeordnet werden. Zweckmäßigerweise sind die freien Endbereiche der Tragbügel nach außen abgewinkel und erstrecken sich in die Verstärkungsleiste hinein. Dadurch wird eine ausreichende Anlagefläche zur Verbindung der Einhängewinkel mit den Tragbügeln geschaffen. Besonders vorteilhaft ist es dann noch, wenn die Verstärkungsleiste im Bereich der metallischen Tragbügel gegenüber den restlichen Bereichen nach außen verspringt, vorzugsweise in einem Bogen verspringt. Dadurch wird die Anlagefläche noch vergrößert. Damit beim Verbinden der Tragbügel mit den Einhängewinkeln sich diese nicht verdrehen, ist vorgesehen, daß auf den oberen Flächen der Verstärkungsleisten seitlich neben den Einhängewinkeln liegende Führungsstege angeformt sind.

Ein beispielsweise an den Obergurt eines Balkongeländers angehängter Kunststoffblumenkasten hängt normalerweise schräg, da sich der untere Bereich gegen die Gitterstäbe oder Balkonbretter abstützt. Damit der Kunststoffblumenkasten gerade hängt, das heißt, der Boden in einer horizontalen oder annähernd horizontalen Ebene steht, ist vorgesehen, daß an dem dem Boden zugeordneten Bereich wenigstens eines Tragbügels ein Justierwinkel festgesetzt ist. Dieser Justierwinkel kann quer zum Kunststoffblumenkasten verstellt werden, so daß eine genaue Ausrichtung erforderlich ist. Da es nun passieren kann, daß dieser Justierwinkel zwischen zwei Gitterstäben liegt, ist in weiterer Ausgestaltung vorgesehen, daß an einem freien Schenkel des Justierwinkels eine schwenkbare Lasche angeordnet ist. Diese Lasche steht parallel und im Abstand zu der zugehörigen Seitenwand.

Die Verbindung der Einhängewinkel und ggfs. der Justierwinkel mit den Tragbügeln läßt sich in einfachster Weise realisieren, wenn in den dem Boden des Kunststoffblumenkastens zugeordneten Bereichen der Bügel und in den oberen nach außen abgewinkelten Endbereichen Gewindebohrungen zur Verschraubung mit den Einhängewinkeln bzw. den Justierwinkeln vorgesehen sind.

Häufig wird der Kunststoffblumenkasten auch als sogenannter Bewässerungskasten mit einem Zwischenboden ausgeführt. Unterhalb des Zwischenbodens steht dann das Wasserbad. Insbesondere bei einer solchen Ausführung ist es dann notwendig, daß die Gewindebohrungen abgedichtet werden. Dazu ist vorgesehen, daß der Boden des Kunststoffblumenkastens mit die Gewindebohrungen der Bügel abdeckenden, nach innen gerichteten Einziehungen versehen ist. Außerdem liegen dann in diesen Einziehungen die Überstände der Schrauben. Bei einem Kunststoffblumenkasten, bei dem die Tragbügel in den Seitenwänden und dem Boden eingebettet sind, ist vorgesehen, daß die Seitenwände und der Boden des Kunststoffblumenkastens im Bereich der Tragbügel gegenüber den restlichen Bereichen verdickt ist, und daß der Boden mit an die verdickten Bereiche angepaßten und nach außen gerichteten Ausformungen versehen ist. Sofern der Kunststoffblumenkasten als Bewässerungskasten ausgebildet ist, ist vorgesehen, daß an dem Boden zumindest ein nach außen offener Überlaufstutzen angesetzt ist. Durch den integrierten Tragbügel wird dessen gesamte Höhe ausgenutzt, da er sich über den Wasser- und den Erdbereich erstreckt.

Die Tragbügel sollten aus einem ausreichend belastbaren Material gefertigt werden, beispielsweise aus Stahl oder einem glasfaserverstärkten Kunststoff. Sofern er aus Stahl gefertigt ist, sollte ein nicht rostender Stahl verwendet werden. Alternativ wäre auch ein Bundmetall möglich.

Anhand der beiliegenden Zeichnungen wird die Erfindung noch näher erläutert.

Es zeigen:
- Figur 1: einen erfindungsgemäßen Kunststoffblumenkasten in einer perspektivischen Darstellung,
- Figur 2: den Kunststoffblumenkasten nach der Fig. 1 im Querschnitt mit einem Schnittverlauf durch die eingebetteten metallischen Bügel und
- Figur 3: den Kunststoffblumenkasten nach der Fig. 1 im Längsschnitt, jedoch nur einen Stirnendbereich zeigend.

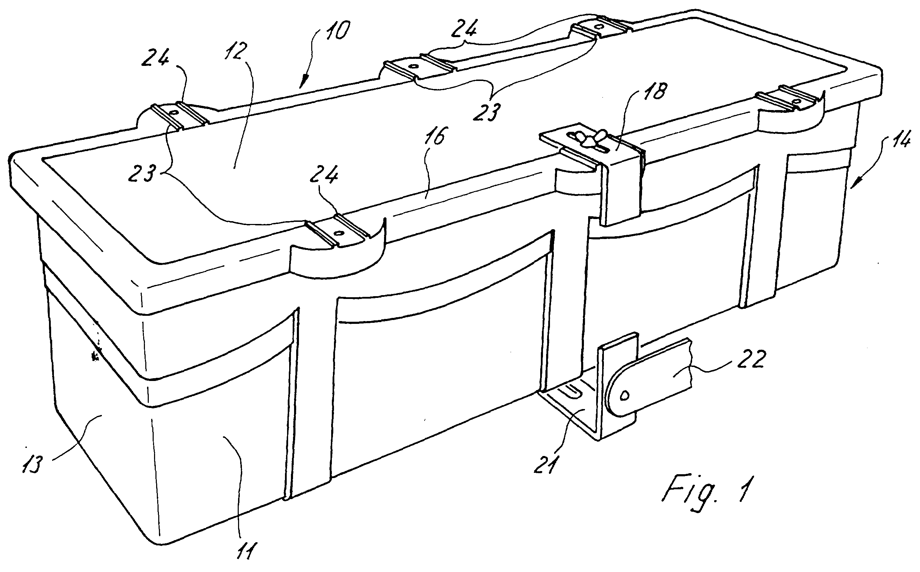

Der in der Fig. 1 dargestellte Kunststoffblumenkasten 10 besteht im wesentlichen aus den beiden Seitenwänden 11, 12, den beiden Stirnwänden 13, 14 und dem Boden 15. Diese vorgenannten Elemente bilden den Kastenrumpf.

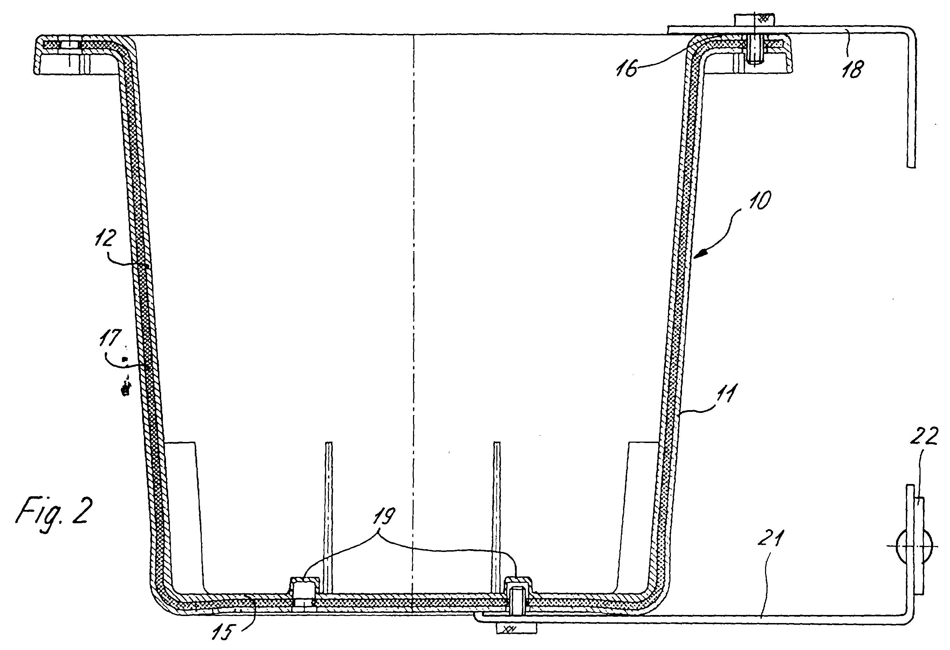

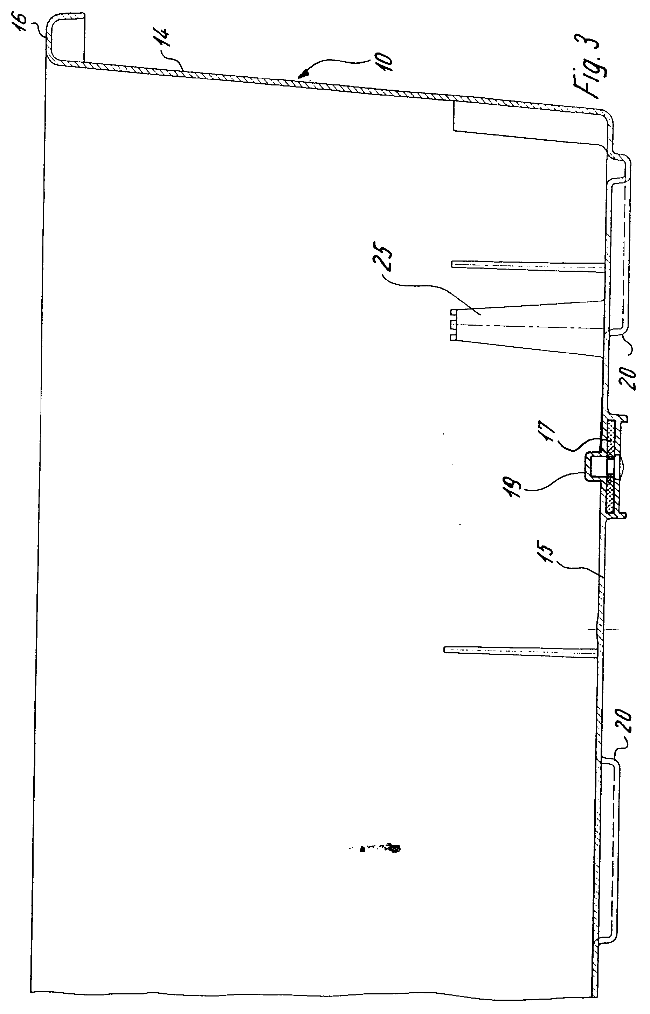

Im dargestellten Ausführungsbeispiel ist an dem oberen Rand des Kunststoffblumenkastens 10 eine umlaufende Verstärkungsleiste 16 angeformt, die nach unten, in Richtung zum Boden 16 offen ist. Wie insbesondere die Fig. 2 und 3 zeigen, ist diese Verstärkungsleiste im Querschnitt U-förmig ausgebildet.

Ferner ist im dargestellten Ausführungsbeispiel der Kunststoffblumenkasten 10 mit drei Tragbügeln 17 bestückt, die innerhalb der beiden Seitenwandungen 11, 12 und des Bodens 15 liegen. Diese Tragbügel 17 sind in den Bereichen der oberen Ränder der beiden Seitenwände 11, 12 nach außen abgewinkelt und erstrecken sich demzufolge in die Verstärkungsleiste 16 hinein. Diese Tragbügel 17 sind vollkommen von dem Kunststoffmaterial umgeben, so daß sie keinen Witterungseinflüssen unterliegen. Die Anzahl der in den Kunststoffblumenkasten 10 integrierten Tragbügel 17 richtet sich nach seiner Länge. Die Abstände zwischen den einzelnen Tragbügeln 17 sind etwa doppelt so groß wie die Abstände der äußeren Tragbügel 17 zu den Stirnwänden 13, 14. Im Gegensatz zu der dargestellten Ausführung könnten die Tragbügel 17 auch an den Innenflächen der Seitenwände 11, 12 und des Bodens 15 anliegend angeordnet sein. An jedem Tragbügel 17 ist an einem abgewinkelten Endbereich ein nach außen gerichteter Einhängewinkel 18 mittels einer Schraube angeschraubt. Diese Einhängewinkel 18 übergreifen im aufgehängten Zustand des Kunststoffblumenkastens 10 beispielsweise den Obergurt eines Balkongeländers oder einem Brüstungsrand. An dem dem Boden 15 zugeordneten Bereich des mittleren Tragbügels 17 ist ein Justierwinkel 21 angeschraubt. Dieser Justierwinkel läßt sich quer zum Kunststoffblumenkasten 10 verschieben, um im Bedarfsfalle den Kunststoffblumenkasten 10 so auszurichten, daß er gerade hängt. Da dieser Justierwinkel 21 beispielsweise zwischen zwei Stäben eines Balkongitters liegen könnte, ist vorgesehen, daß an dem freien abgewinkelten Steg eine Lasche 22 drehbar angeordnet ist. Diese Lasche 22 kann dann so geschwenkt werden, daß sie sich gegen einen Gitterstab abstützt.

Insbesondere aus der Fig. 1 geht hervor, daß auf die oberen Flächen der Verstärkungsleiste 16 seitlich neben den Einhängewinkeln 18 stehende Führungsstege 23, 24 angeformt sind, damit sich beim Montieren der jeweilige Einhängewinkel 18 nicht verdrehen kann.

Wie insbesondere die Fig. 2 und 3 zeigen, ist der dargestellte Kunststoffblumenkasten 10 ein sogenannter Bewässerungskasten, der mit einem nicht dargestellten Zwischenboden versehen ist. Damit in dem unteren Bereich des Kunststoffblumenkastens 10 eingefülltes Wasser nicht in die Verschraubungen der Tragbügel 17 mit dem Justierwinkel 21 gelangt, ist der Boden 15 des Kunststoffblumenkastens 10 mit nach innen gerichteten Einziehungen 19 versehen, wodurch die Gewindebohrungen abgedeckt werden. Außerdem ragen in diese Einziehungen die Überstände der Schrauben zur Verbindung des Tragbügels 17 mit dem Justierwinkel 21. Im Bereich der Tragbügel 17 sind die Seitenwände 11, 12 und der Boden 15 gegenüber den restlichen Elementen verdickt. Diese Verdickungen entfallen, wenn entgegen der dargestellten Ausführung die Tragbügel 17 an den Innenflächen der Seitenwände 11, 12 und des Bodens 15 anliegen. Da es auch üblich ist, einen solchen Kunststoffblumenkasten 10 auf eine Wand oder einen Boden zu stellen, würde er sich nur im Bereich der Tragbügel 17 abstützen. Damit sich zusätzliche Abstützungen ergeben, ist der Boden 15 des Kunststoffblumenkastens 10 noch mit weiteren nach außen gerichteten Ausformungen 20 versehen.

Damit der Wasserstand innerhalb des Kunststoffblumenkastens 10 begrenzt wird, ist am Boden 15 innenseitig noch ein Überlaufstutzen 25 angeformt, der nach außen offen ist. Aus Gründen der vereinfachten Darstellung ist der in der Fig. 1 dargestellte Kunststoffblumenkasten 10 nur mit einem Einhängewinkel 18 ausgestattet. Selbstverständlich sind an die beiden äußeren, in dieser Figur nicht erkennbaren Tragbügel 17 ebenfalls Einhängewinkel 18 angeschraubt. Außerdem könnte der Kunststoffblumenkasten 10 auch mit zwei oder drei Justierwinkeln ausgerüstet werden. Die Tragbügel 17 sind aus einem entsprechend hoch belastbaren Material, beispielsweise aus Metall oder glasfaserverstärktem Kunststoff gefertigt. Sofern sie aus Stahl gefertigt werden, sollte ein nicht rostender Stahl Verwendung finden. Gleiches gilt auch für die Einhängewinkel 18 und für die Justierwinkel 21.

Die Erfindung ist nicht auf das dargestellte Ausführungsbeispiel beschränkt. Wesentlich sind die in die Seitenwände 11 bzw. 12 und den Boden 15 integrierten oder daran innenseitig angesetzten, entsprechend hoch belastbaren Tragbügeln 17, deren äußere Enden zur Verschraubung mit den Einhängewinkeln 18 nach außen oder innen abgewinkelt sind.

## Patentansprüche

1. Kunststoffblumenkasten, der mittels Blumenkastenhalter aufhängbar ist, die jeweils einen Einhängewinkel und einen damit lösbar verbundenen Tragbügel aufweisen, **dadurch gekennzeichnet, daß** die Tragbügel (17) zumindest in eine der beiden Seitenwände (11, 12) und dem Boden (15) des Kunststoffblumenkastens (10) eingebettet oder an den Innenseiten anliegend angeordnet sind.

2. Kunststoffblumenkasten an dessen oberen, dem Boden abgewandten Rand eine vorzugsweise umlaufende, nach außen gerichtete und zum Boden offene Verstärkungsleiste angeformt ist, **dadurch gekennzeichnet, daß** jeder Tragbügel (17) sich von einer längsseitigen Verstärkungsleiste (16) durch die beiden Seitenwände (11, 12) und dem Boden (15) hindurch bis in die andere längsseitige Verstärkungsleiste (16) erstreckt oder an den Innenflächen der beiden Seitenwände (11, 12) und der Innenfläche des Bodens (15) anliegend angeordnet ist, und daß die freien Endbereiche jedes Tragbügels (17) nach innen oder außen abgewinkelt sind.

3. Kunststoffblumenkasten nach Anspruch 1 oder 2, **dadurch gekennzeichnet, daß** an dem dem Boden (15) zugeordneten Bereich wenigstens eines Tragbügels (17) ein Justierwinkel (21) festgesetzt ist, der quer zum Kunststoffblumenkasten (10) ver-schiebbar ist.

4. Kunststoffblumenkasten nach Anspruch 3, **dadurch gekennzeichnet, daß** der Justierwinkel (21) mit einer schwenkbaren Lasche (22) versehen ist, die parallel und im Abstand zur zugeordneten Seitenwand (11) oder (12) des Kunststoffblumenkastens (10) steht.

5. Kunststoffblumenkasten nach einem oder mehreren der vorhergehenden Ansprüche 1 bis 4, **dadurch gekennzeichnet, daß** auf den oberen Flächen der Verstärkungsleiste (16) seitlich neben den Einhängewinkeln (18) liegende Führungsstege (23, 24) angeformt sind.

6. Kunststoffblumenkasten nach einem oder mehreren der vorhergehenden Ansprüche 1 bis 5, **dadurch gekennzeichnet, daß** die Verstärkungsleiste (16) im Bereich der Tragbügel (17) gegenüber den angrenzenden Bereichen nach außen verspringt, vor-zugsweise in einem Bogen verspringt.

7. Kunststoffblumenkasten nach einem oder mehreren der vorhergehenden Ansprüche 1 bis 6, **dadurch gekennzeichnet, daß** in den dem Boden (15) des Kunststoffblumenkastens (10) zugeordneten Bereichen der Tragbügel (17) und in den oberen, nach außen oder innen abgewinkelten Endbereichen Gewindebohrungen zur Verschraubung mit den Einhängewinkeln (18) und ggfs. mit den Justierwinkeln (21) vorgesehen sind.

8. Kunststoffblumenkasten nach Anspruch 7, **dadurch gekennzeichnet, daß** der Boden (15) des Kunststoffblumenkastens (10) mit die Gewindebohrungen der Tragbügel (17) abdeckenden, nach innen gerichteten Einziehungen (19) versehen ist.

9. Kunststoffblumenkasten nach einem oder mehreren der vorhergehenden Ansprüche 1 bis 8, bei dem die Tragbügel (17) in wenigstens eine Seitenwand und in den Boden eingebettet sind, **dadurch gekennzeichnet, daß** die Seitenwände (11, 12) und der Boden (15) des Kunststoffblumenkastens (10) im Bereich der Tragbügel (17) gegen-über den angrenzenden Bereichen verdickt ist, und daß der Boden (15) mit an die ver-dickten Bereiche angepaßten und nach außen gerichteten Ausformungen (20) versehen ist.

10. Kunststoffblumenkasten nach einem oder mehreren der vorhergehenden Ansprüche 1 bis 9, **dadurch gekennzeichnet, daß** an dem Boden (15) des Kunststoffblumenkastens (10) innenseitig ein nach außen offener Überlaufstutzen (25) angeformt ist.

11. Kunststoffblumenkasten nach einem oder mehreren der vorhergehenden Ansprüche 1 bis 10, **dadurch gekennzeichnet, daß** zumindest die Tragbügel (17) aus einem nicht rostenden Material, beispielsweise aus einem nicht rostenden Stahl oder einem glas-faserverstärkten Kunststoff gefertigt sind.
